# DEMANDE DE BREVET EUROPEEN

(11) **EP 3 409 916 A1**
(43) Date de publication de la demande: **05.12.2018**
(21) Numéro de dépôt: 18170598.9
(22) Date de dépôt: 03.05.2018
(51) Int. Cl.: F02B 23/06

(54) **PISTON DE MOTEUR THERMIQUE**

(30) Priorité: 01.06.2017 FR 1754887
(71) Demandeur: PSA Automobiles SA, 78300 Poissy (FR); IFP Energies nouvelles, 92852 Rueil-Malmaison Cedex (FR); Renault SAS, 92100 Boulogne Billancourt (FR)
(72) Inventeur: BOISSARD, ROMAIN, 78000 VERSAILLES (FR); LAGET, OLIVIER, 92500 RUEIL MALMAISON (FR); MALBEC, Louis-Marie, 75007 PARIS (FR); GASTALDI, Patrick, 91190 GIF SUR YVETTE (FR)

(57) **Abrégé**

Le piston comprend un bol de combustion de carburant (2) et une partie supérieure (4) formant une zone de chasse du piston, le bol de combustion de carburant ayant une cavité centrale (2₁), une cavité annulaire (22), une lèvre (3) située au niveau d'une périphérie supérieure de la cavité centrale, et cavité annulaire surplombant la cavité centrale en étant située entre la lèvre et la partie supérieure. Conformément à l'invention, la cavité annulaire est définie par un plateau annulaire (22) entourant la lèvre et formant un angle α compris entre 80 degrés et 100 degrés avec une paroi périphérique (23) s'élevant du plateau annulaire jusqu'à la partie supérieure.

## Description

L'invention concerne de manière générale le domaine des moteurs thermiques. Plus particulièrement, l'invention se rapporte à un piston de moteur thermique. L'invention se rapporte aussi à toutes les applications des moteurs thermiques, notamment comme moteurs de propulsion de véhicules terrestres ou maritimes, notamment de véhicules automobiles, ou comme génératrice dans des applications autres que la propulsion de véhicules.

La combustion hétérogène du carburant dans un moteur thermique Diesel génère des suies.

Dans un moteur thermique équipé de pistons ayant un dessin de bol de combustion classique, le passage des suies dans l'huile du moteur est influencé par deux mécanismes lors de la combustion.

Dans le premier mécanisme, une première bouffée de suies résulte de la cinétique du jet de carburant dans la chambre de combustion. Les suies proches du premier cordon du piston, ou cordon de feu, passent dans l'huile moteur du fait d'une fuite des gaz de la chambre de combustion vers le bas du moteur.

Dans le deuxième mécanisme, une deuxième bouffée due au mécanisme aérodynamique de chasse inverse transporte les suies du bol vers la zone de chasse. Les suies se déposent alors sur les parois du cylindre au cours de la phase de détente et passent ensuite dans l'huile moteur du fait du raclage par la segmentation du piston.

L'accumulation des suies dans l'huile dégrade les qualités lubrifiantes de celle-ci. La dégradation des qualités lubrifiantes de l'huile induit un risque d'usure, voire de casse, de certaines pièces mécaniques. Il en résulte la nécessité de réduire l'intervalle entre deux vidanges, ce qui accroit le coût d'entretien du véhicule.

Par CN103696870B, il est connu un piston muni d'un bol de combustion ayant un profil en W et comportant une rainure biseautée au-dessus d'une lèvre périphérique du bol. Ce piston de la technique antérieure n'apporte pas de solution au problème de l'accumulation des suies dans l'huile du moteur thermique.

Il existe donc un besoin pour un piston ayant une géométrie optimisée du bol, de manière à réduire le passage des suies dans l'huile moteur et éviter ainsi la dégradation des qualités lubrifiantes de celle-ci.

L'invention concerne un piston de moteur thermique comprenant un bol de combustion de carburant et une partie supérieure formant une zone de chasse du piston, le bol de combustion de carburant ayant une cavité centrale, une cavité annulaire, une lèvre située au niveau d'une périphérie supérieure de la cavité centrale, et la cavité annulaire surplombant la cavité centrale en étant située entre la lèvre et la partie supérieure.

Conformément à l'invention, la cavité annulaire est définie par un plateau annulaire entourant la lèvre et formant un angle α compris entre 80 degrés et 100 degrés avec une paroi périphérique s'élevant du plateau annulaire jusqu'à la partie supérieure. Pour certaines formes de réalisation particulières, l'angle α pourra être compris entre 85 degrés et 95 degrés.

Selon une caractéristique particulière, une zone de raccordement entre une zone de surface descendante et un fond de la cavité centrale est convexe.

Selon une autre caractéristique particulière, le piston selon l'invention a un rapport Y/Z, en pourcentage, compris entre 50% et 90%,
Y étant une hauteur du plateau annulaire par rapport à un fond de la cavité centrale, et
Z étant une hauteur de la partie supérieure par rapport au fond de la cavité centrale.

Selon encore une autre caractéristique particulière, le piston selon l'invention a un rapport B/C, en pourcentage, compris entre 30% et 70%,
B étant une largeur diamétrale du plateau annulaire, entre la lèvre et la paroi périphérique, et
C étant une largeur diamétrale entre la lèvre et un bord externe de piston.

Selon encore une autre caractéristique particulière, le piston selon l'invention a un rapport X/Z, en pourcentage, compris entre 20% et 40%,
X étant la hauteur d'un sommet de la cavité centrale par rapport au fond de celle-ci, et
Z étant la hauteur de la partie supérieure par rapport au fond de la cavité centrale.

Selon encore une autre caractéristique particulière, le piston selon l'invention a un rapport X/A, en pourcentage, compris entre 10% et 30%,
X étant la hauteur du sommet de la cavité centrale par rapport au fond de celle-ci, et
A étant un rayon minimum de la cavité centrale.

Selon d'autres aspects, l'invention concerne également un moteur thermique comprenant au moins un piston comme décrit brièvement ci-dessus et un véhicule automobile équipé d'un tel moteur thermique.

D'autres avantages et caractéristiques de la présente invention apparaîtront plus clairement à la lecture de la description détaillée ci-dessous de plusieurs formes de réalisation particulières d'un piston de moteur thermique selon l'invention, en référence aux dessins annexés, dans lesquels :
la Fig.1 est une vue simplifiée montrant la structure géométrique et les cotes correspondantes d'un piston de moteur thermique Diesel selon l'invention ;
la Fig.2 est une vue tronquée en perspective de la partie supérieure du piston de la Fig.1 ;
les Figs.3A à 3C montrent des distributions des gaz dans la chambre de combustion pour des angles de rotation de vilebrequin de 14°, 19° et 25° ;
les Figs.4A et 4B montrent des zooms de la cavité centrale du piston selon l'invention pour le bol de l'invention et un bol de la technique antérieure, avec un angle de rotation de vilebrequin de 45° ;
les Figs.5A et 5B montrent des zooms dans la zone de chasse du piston selon l'invention pour le bol de l'invention et un bol de la technique antérieure, avec un angle de rotation de vilebrequin de 65° ; et
la Fig.6 montre une variante de réalisation du piston selon l'invention.

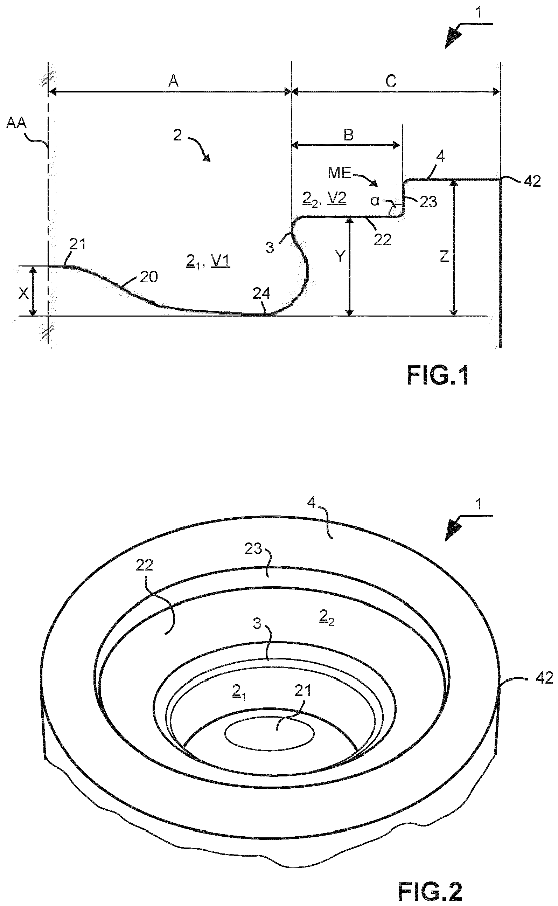

En référence aux Figs.1 et 2, il est décrit ci-dessous la partie supérieure d'un piston 1 selon l'invention pour un moteur thermique de type Diesel. Le piston 1 a un axe longitudinal AA et comprend, de manière classique, un bol de combustion 2.

Comme montré aux Figs.1 et 2, le bol 2 comporte une cavité centrale 2₁ et une cavité annulaire 2₂ qui surplombe la cavité centrale 2₁. Aux cavité centrale 2₁ et cavité annulaire 2₂ correspondent respectivement un volume principal V1 et un volume secondaire V2.

La cavité centrale 2₁ est une cavité asymétrique formant un bol de combustion de piston Diesel. La cavité centrale 2₁ a un profil curviligne avec un sommet 21 et une lèvre 3. La lèvre 3 est située à une périphérie supérieure de la cavité centrale 2₁. La lèvre 3 sépare la cavité centrale 2₁ de la cavité annulaire 2₂. Dans le profil curviligne, le raccordement entre une zone de surface descendante 20 et un fond 24 de la cavité centrale 2₁ est convexe. On notera que ce raccordement convexe apporte une meilleure extraction des suies dans le fond de bol 2.

La cavité annulaire 2₂ comporte un plateau annulaire 22 et une paroi périphérique 23 dont la forme circulaire est centrée sur l'axe longitudinal AA du piston 1. Le plateau annulaire 22 s'étend diamétralement depuis la lèvre 3 jusqu'à la paroi périphérique 23. La paroi périphérique 23 s'élève verticalement du plateau annulaire 22 jusqu'à une partie plane supérieure 4 du piston appelée « zone de chasse ». La paroi périphérique 23 et le plateau annulaire 22 sont agencés de préférence de manière sensiblement perpendiculaire. Plus précisément, la paroi périphérique 23 et le plateau annulaire 22 forment un angle α qui pourra être compris entre 80° et 100°. De préférence, l'angle α sera compris entre 85° et 95°. Une marche ME est ainsi formée entre le plateau 22 et la partie plane supérieure de chasse 4.

La partie plane supérieure 4 a une forme annulaire qui s'étend depuis une extrémité haute de la paroi périphérique 23 jusqu'à un bord externe de piston 42.

Dans la forme de réalisation montrée à la Fig.1, les plans horizontaux du plateau annulaire 22 et de la partie plane supérieure 4 sont perpendiculaires à l'axe longitudinal AA du piston 1.

Les essais réalisés par l'entité inventive ont permis de définir une structure géométrique optimale pour le piston 1 selon l'invention.

En référence à la Fig.1, la structure géométrique du piston 1 est définie au moyen des cotes suivantes :
- α qui est l'angle entre le plateau annulaire 22 et la paroi périphérique 23 qui définissent la cavité annulaire 2₂.
- A qui est un rayon minimum de la cavité centrale 2₁ ;
- B qui est une largeur diamétrale du plateau annulaire 22, entre la lèvre 3 et la paroi périphérique 23 ;
- C qui est une largeur diamétrale entre la lèvre 3 et le bord externe de piston 42;
- X qui est la hauteur du sommet 21 par rapport à un fond 24 de la cavité centrale 2₁ ; et
- Y qui est la hauteur du plateau annulaire 22 par rapport au fond 24 de la cavité centrale 2₁ ; et
- Z qui est la hauteur de la partie plane supérieure 4 par rapport au fond 24 de la cavité centrale 2₁.

Les relations suivantes 1) à 5) définissent la structure géométrique optimale du piston 1 selon l'invention :
- 1) 80° < α < 100°, et préférentiellement 85° < α < 95°
- 2) 50% < Y/Z < 90% ;
- 3) 30% < B/C < 70% ;
- 4) 20% < X/Z < 40% ; et
- 5) 10% < X/A < 30%.

La relation 1) définit la géométrie angulaire entre le plateau annulaire 22 et la paroi périphérique 23 qui définissent la cavité annulaire 2₂.

Les relations 2) et 3) définissent une géométrie de la cavité annulaire 2₂ qui optimise un effet d'enroulement des gaz de combustion suite à leur passage de la marche ME.

La satisfaction des relations 1) à 3) par la cavité annulaire 2₂ conduit à la génération d'un mécanisme aérodynamique qui protège le premier cordon du piston 1 selon l'invention contre la bouffée de suies résultant de la cinétique du jet de carburant dans la chambre de combustion. Bien entendu, le choix des valeurs dans les intervalles données dépendra de l'application et conduira à la définition d'un volume secondaire V2 optimisant l'effet aérodynamique sur la bouffée de suies.

La relation 4) définit un profil de bol avec une pente modérée dans la cavité centrale 2₁, comparativement aux profils de bol conventionnels.

La relation 5) définit une cavité centrale 2₁ qui a un fond plus plat que les bols conventionnels.

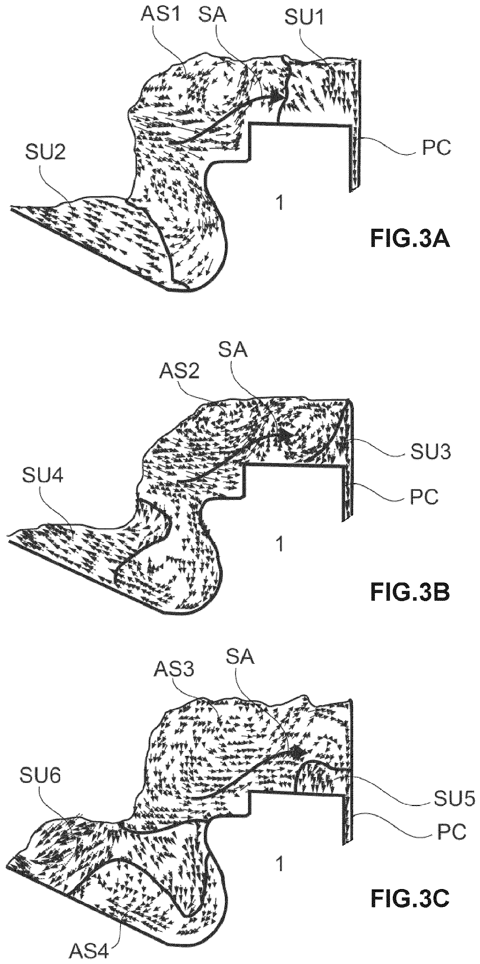

Les Figs.3A, 3B et 3C montrent le mécanisme aérodynamique de protection du premier cordon contre la première bouffée de suies des gaz de combustion. Les répartitions des gaz de combustion des Figs.3A, 3B et 3C correspondent respectivement à des angles de rotation de vilebrequin de 14°, 19° et 25°. Le passage SA de la « marche » formée par la cavité annulaire 2₂ provoque un effet d'enroulement qui protège la zone du premier cordon PC. Dans les Figs.3A à 3C, les zones AS1, AS2, AS3 et AS4 sont des zones à forte concentration de suies et les zones SU1, SU2, SU3, SU4, SU5 et SU6 sont des zones à moindre concentration de suies. Comme il apparaît dans les Figs.3A à 3C, la zone du premier cordon PC reste incluse dans des zones à moindre concentration de suies SU1, SU3 et SU5, respectivement.

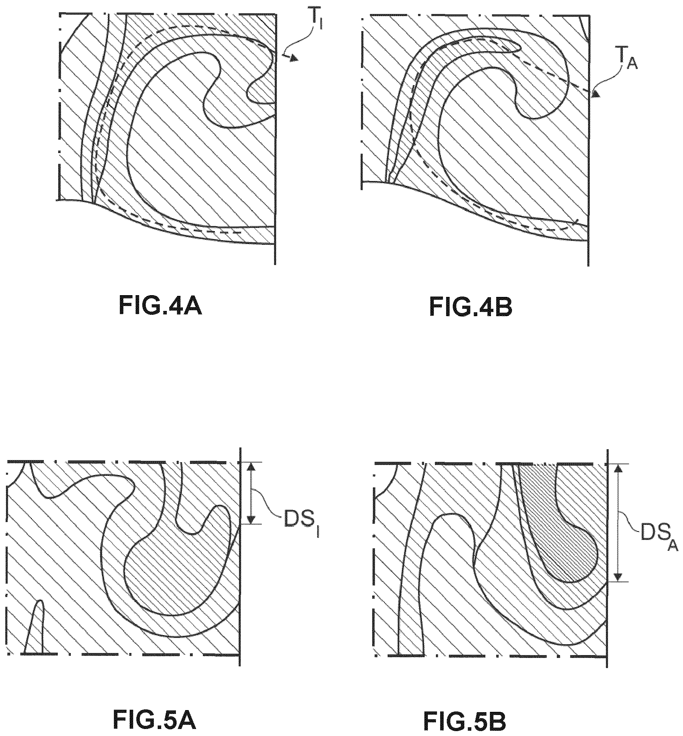

Les Figs.4A et 4B montrent des zooms de la cavité centrale 2₁, avec un angle de rotation de vilebrequin de 45°, pour le bol de l'invention et un bol de la technique antérieure, respectivement. Comme cela apparaît clairement dans les Figs.4A et 4B, le trajet des suies T_{I} dans le bol de l'invention a une distance nettement supérieure à celle du trajet des suies T_{A} dans le bol de la technique antérieure. Dans le bol de l'invention, la distance parcourue par les suies avant que celles-ci n'atteignent la paroi du cylindre est plus importante, ce qui laisse davantage de temps au phénomène de post-oxydation et réduit la quantité des suies à proximité des parois.

Les Figs.5A et 5B montrent des zooms dans la zone de chasse, avec un angle de rotation de vilebrequin de 65°, pour le bol de l'invention et un bol de la technique antérieure, respectivement. Avec le bol de l'invention, la zone de contact DS_{I} des suies sur la paroi du cylindre est plus haute dans la zone de chasse par rapport à la zone de contact DS_{A} avec le bol de la technique antérieure.

Comparativement à la technique antérieure, le bol de l'invention plaque donc davantage la bouffée de suies sur le haut de la chambre de combustion lors du mécanisme de chasse inverse. Cela permet de limiter au maximum le mécanisme de dépôt des suies sur les parois du cylindre au fur et à mesure de la descente du piston. Compte-tenu que les suies sont déposées principalement dans la zone haute du cylindre, qui n'est pas raclée par la segmentation du piston, elles ne passent pas dans l'huile suite au raclage.

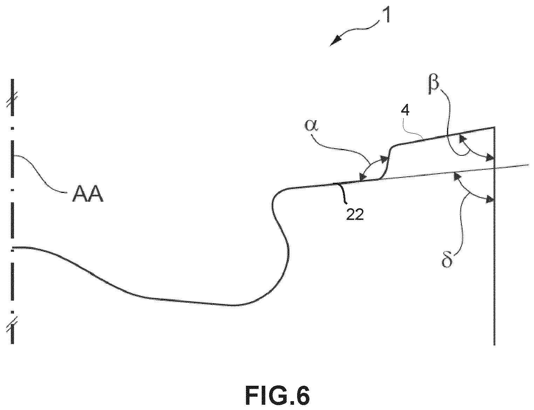

Dans la variante de réalisation de la Fig.6, le plateau annulaire 22 et la partie supérieure de chasse 4 sont inclinés par rapport à la surface de jupe du piston 1, leurs inclinaisons étant descendantes du haut vers le bas du piston. De manière générale, dans cette variante de réalisation, l'angle δ formé entre le plateau annulaire 22 et la surface de jupe du piston pourra être compris entre 80° à 90° et celui β formé entre la partie supérieure de chasse 4 et la surface de jupe du piston pourra aussi être compris entre 80° à 90°.

L'invention ne se limite pas aux formes de réalisation particulières qui ont été décrites ici à titre d'exemple. L'homme du métier, selon les applications de l'invention, pourra apporter différentes modifications et variantes qui entrent dans la portée des revendications ci-annexées.

## Revendications

1. Piston de moteur thermique comprenant un bol de combustion de carburant (2) et une partie supérieure (4) formant une zone de chasse du piston, ledit bol de combustion de carburant (2) ayant une cavité centrale (2₁), une cavité annulaire (2₂), une lèvre (3) située au niveau d'une périphérie supérieure de ladite cavité centrale (2₁), et ladite cavité annulaire (2₂) surplombant ladite cavité centrale (2₁) en étant située entre ladite lèvre (3) et ladite partie supérieure (4), **caractérisé en ce que** ladite cavité annulaire (2₂) est définie par un plateau annulaire (22) entourant ladite lèvre (3) et formant un angle α compris entre 80 degrés et 100 degrés avec une paroi périphérique (23) s'élevant dudit plateau annulaire (22) jusqu'à ladite partie supérieure (4), et en ce **en ce que** son rapport X/Z, en pourcentage, est compris entre 20% et 40%,
X étant la hauteur d'un sommet (21) de ladite cavité centrale (2₁) par rapport à un fond (24) de celle-ci, et
Z étant une hauteur de ladite partie supérieure (4) par rapport audit fond (24) de ladite cavité centrale (2₁).

2. Piston selon la revendication 1, **caractérisé en ce que** ledit angle α est compris entre 85 degrés et 95 degrés.

3. Piston selon la revendication 1 ou 2, **caractérisé en ce qu'**une zone de raccordement entre une zone de surface descendante (20) et un fond (24) de ladite cavité centrale (2₁) est convexe.

4. Piston selon l'une quelconque des revendications 1 à 3, **caractérisé en ce que** son rapport Y/Z, en pourcentage, est compris entre 50% et 90%,
Y étant une hauteur dudit plateau annulaire (22) par rapport à un fond (24) de ladite cavité centrale (2₁), et
Z étant une hauteur de ladite partie supérieure (4) par rapport audit fond (24) de ladite cavité centrale (2₁).

5. Piston selon l'une quelconque des revendications 1 à 4, **caractérisé en ce que** son rapport B/C, en pourcentage, est compris entre 30% et 70%,
B étant une largeur diamétrale dudit plateau annulaire (22), entre ladite lèvre (3) et ladite paroi périphérique (23), et
C étant une largeur diamétrale entre ladite lèvre (3) et un bord externe de piston (42).

6. Piston selon l'une quelconque des revendications 1 à 5, **caractérisé en ce que** son rapport X/A, en pourcentage, est compris entre 10% et 30%,
X étant la hauteur d'un sommet (21) de ladite cavité centrale (2₁) par rapport à un fond (24) de celle-ci, et
A étant un rayon minimum de ladite cavité centrale (2₁).

7. Moteur thermique **caractérisé en ce qu'**il comprend au moins un piston selon l'une quelconque des revendications 1 à 6.

8. Véhicule automobile **caractérisé en ce qu'**il comprend un moteur thermique selon la revendication 7.
